# EUROPÄISCHE PATENTSCHRIFT

(11) **EP 1 140 654 B1**
(45) Veröffentlichungstag und Bekanntmachung des Hinweises auf die Patenterteilung: **02.04.2003**
(21) Anmeldenummer: 99965443.7
(22) Anmeldetag: 09.12.1999
(51) Int. Cl.: B65D 77/20

(54) **WIEDERVERSCHLIESSBARE KUNSTSTOFFVERPACKUNG MIT EINEM KLETTVERSCHLUSS**
RESEALABLE PLASTIC PACKAGING CONTAINER WITH HOOK AND LOOP CLOSURE
EMBALLAGE PLASTIQUE REFERMABLE DOTE D'UNE FERMETURE AUTO-AGRIPPANTE

(30) Priorität: 21.12.1998 DE 19859043
(43) Veröffentlichungstag der Anmeldung: 10.10.2001
(73) Patentinhaber: CFS GmbH Kempten, 87437 Kempten (DE)
(72) Erfinder: BERNDT, Dieter, D-14167 Berlin (DE); GIEBEL, Matthias, D-12277 Berlin (DE); WALDAU, Christoph, D-12209 Berlin (DE); REINERS, Ulrich, NL-5802 BC Venray (NL); FUX, Rudi, D-35713 Eschenburg-Eibelshausen (DE); KARLSSON, Roland, D-35037 Marburg (DE)
(74) Vertreter: Wolff, Felix, Dr.
(86) Internationale Anmeldenummer: EP9909674
(87) Internationale Veröffentlichungsnummer: WO00037334

(56) Entgegenhaltungen:
- EP-A- 0 427 512
- EP-A- 0 621 197
- EP-A- 0 716 986
- FR-A- 2 568 481
- US-A- 4 848 543

## Beschreibung

Die vorliegende Erfindung betrifft eine wiederverschließbare Kunststoffverpackung, die aus einer Verpackungsmulde und einer Deckelfolie besteht, wobei die Deckelfolie zumindest teilweise peelbar an die Verpackungsmulde gesiegelt ist.

Verpackungsgüter, insbesondere Lebensmittel werden heutzutage immer öfter in Kunststoffverpackungen zum Verkauf angeboten. Diese Kunststoffverpackungen weisen eine Verpackungsmulde, in der sich das Verpackungsgut befindet und einen Deckelfolie auf. Die Deckelfolie ist an die Verpackungsmulde gesiegelt. Da das Verpackungsgut nach dem öffnen oftmals nicht sofort verbraucht wird, ist es von Vorteil, wenn die Verpackung nach dem Öffnen wiederverschließbar ist.

Es hat deshalb in der Vergangenheit nicht an Versuchen gefehlt, wiederverschließbare Verpackungen zur Verfügung zu stellen. Beispielhaft seien hier nur die EP 0 564 695, DE 39 25 746, EP 0 386 490, DE 39 41 183, EP 0 408 516, WO 97/05023, EP 0 716 986, EP 0 595 368, EP 0 579 262, EP 0 506 295, EP 0 427 513, EP 0 427 512, EP 0 385 565, EP 0 381 329 oder EP0 379 927 genannt, in denen entweder Verfahren und Vorrichtungen zur Herstellung einer wiederverschließbaren Verpackung und/oder die wiederverschließbare Verpackung selbst gelehrt werden. Alle die, in den oben genannten Veröffentlichungen offenbarten, wiederverschließbaren Verpackungen haben entweder den Nachteil, daß sie aufwendig herzustellen und/oder nur schlecht wiederverschließbar sind.

Es stellt sich deshalb die Aufgabe eine wiederverschließbare Kunststoffverpackung zur Verfügung zu stellen, die die Nachteile des Standes der Technik nicht aufweist. Die Aufgabe wird erfindungsgemäß durch die Bereitstellung einer wiederverschließbaren Kunststoffverpackung gemäß der Patentansprüche 1-3 gelöst.

Eine Verpackungsmulde im Sinne der Erfindung ist jede dem Fachmann geläufige Verpackungsmulde, die aus einer, vorzugsweise für die Verpackung von Lebensmitteln üblichen, thermoplastischen und formstabilen Ein- oder Mehrschichtfolien hergestellt wurde.

Die Folie muß an mindestens einer ihrer beiden Oberflächen eine Siegelschicht aufweisen, die peelfähig ist. Als Siegelschicht wird vorzugsweise eine Mischung aus LDPE (Low Density Polyethylen) und einem Polybutylen verwendet. Die Mischung enthält vorzugsweise 15 bis 30 Gew.%, besonders bevorzugt 20 bis 28 Gew.% Polybutylen. Vorzugsweise weist das Polybutylen einen Schmelzindex (MFI) im Bereich von 0,3 bis 2,0 g/10 min (190°C und 216 kg gemäß ASTM 1238) auf.

Besonders bevorzugt wird die Verpackungsmulde aus einer mehrschichtigen Folie mit einer geschäumten Trägerfolie, vorzugsweise einer geschäumten Polyolefin-Folie, besonders bevorzugt eine Polypropylen-Folie, mit ggf. einer Gassperrschicht hergestellt.

Ganz besonders bevorzugt wird die Verpackungsmulde aus einer Folie hergestellt, wie sie in der Patentanmeldung mit dem Aktenzeichen des Deutschen Patentamtes 198 40 046.2 offenbart ist. Diese Patentanmeldung wird hiermit als Referenz eingeführt und gilt somit als Teil der Offenbarung.

Die thermogeformten, vorzugsweise tiefgezogenen Verpackungsmulden werden nach dem Befüllen mit dem Verpackungsgut mit einer dem Fachmann geläufigen Deckelfolien verschlossen. Als Deckelfolien eignen sich insbesondere Mehrschichtfilme mit einer Gassperrschicht aus Ethylenvinylalkohol-Copolymer, vorzugsweise aus Polyethylenterephtalat/Haftvermittlerschlcht/Polyethylen/Haftvermittlerschicht/Ethylen-Vinylalkoholcopolymer/Haftvermittlerschicht/Polyethylen, wobei die Polyethylenterephtalatschicht durch Polypropylen ersetzt sein kann.

Sofern die Deckelfolie der erfindungsgemäßen Verpackung keine Ein- oder Ausbuchtung aufweist, kann sie auch als Gassperrschicht SiOₓ aufweisen. Vorzugsweise ist dann die Deckelfolie aus PET/SiOₓ/Haftvermittler/Polyethylen aufgebaut.

Solche Deckelfolien zeichnen sich durch eine besonders gute Transparenz und eine hohe Knickbruchfestigkeit aus. Die damit versiegelte Packungsmulde hat eine besonders gute Gasbarrierewirkung.

Die Deckelfolie wird erfindungsgemäß an die Verpackungsmulde im Siegelbereich gesiegelt, wobei die Deckelfolie mindestens teilweise peelbar an die Verpackungsmulde gesiegelt wird. Für die peelfähige Siegelung wird die Deckelfolie bei einer Temperatur von 130°C bis 150°C, und einem Druck von 3 • 10⁵ bis 8 • 10⁵ N/m², vorzugsweise von 4,0 • 10⁵ bis 5,0 • 10⁵ N/m² an die Verpackungsmulde gesiegelt. Sofern die erfindungsgemäßen Verpackungen einen nicht peelbare, d. h. fest gesiegelten Teilbereich des Siegelbereiches aufweisen sollen, so wird die feste Siegelung vorzugsweise bei einer mindestens 10°C höheren Temperatur und vorzugsweise dem zweifachen Druck durchgeführt als die peelbare Siegelung. Eine feste Siegelung im Sinne der Erfindung ist eine Siegelung, bei der die Ablösekraft der Deckelfolie um mindestens das Fünffache höher sein muß als im Bereich der peelbaren Siegelung.

Der Siegelbereich an der Verpackungsmulde befindet sich vorzugsweise auf einer waagerechten Ebene oberhalb des Verpackungsgutes und erstreckt sich vorzugsweise auf dieser Ebene um das gesamte Verpackungsgut herum. Bei einer vieleckigen Kunststoffverpackung kann die Deckelfolie an vorzugsweise mindestens einer Seite dieses Vielecks mit der Verpackungsmulde fest gesiegelt sein, während die Deckelfolie in dem verbleibenden Siegelbereich peelfähig mit der Verpackungsmulde gesiegelt wird. Bei einer runden Verpackung kann vorzugsweise 5-25% des Siegelbereiches mit einer festen Siegelung versehen sein.

Erfindungsgemäß weist die wiederverschließbare Kunststoffverpackung mindestens einen Klettverschluß auf, um die Kunststoffverpackung nach dem Öffnen der peelbaren Siegelung wieder zu verschließen. Als Klettverschluß kann jeder beliebige, dem Fachmann geläufige Klettverschluß mit einer beliebigen Form eingesetzt werden. Ein solcher Klettverschluß besteht aus zwei komplementären Teilen, die sich ineinander verhaken und somit einen festen jedoch lösbaren Verbund bilden. Jeweils ein komplementärer Teil des Klettverschlusses wird an der Verpackungsmulde bzw. die Deckelfolie einander gegenüberliegend angebracht. Nach dem Öffnen der Verpackung kann diese wieder verschlossen werden, in dem der Teil des Klettverschlusses, der an dem Deckel angebracht ist in den Teil des Klettverschlusses, der an der Verpackungsmulde angebracht ist, gedrückt wird.

Der Klettverschluß kann auf jede beliebige, dem Fachmann geläufige Weise an der Deckelfolie bzw. der Verpackungsmulde angebracht werden. Vorzugsweise wird er jedoch aufgesiegelt oder durch Hotmelt angebracht, ganz besonders bevorzugt angeklebt.

Vorzugsweise ist der Klettverschluß aus Polypropylen hergestellt.

In einer bevorzugten Ausführungsform befindet sich der Klettverschluß außerhalb des Siegelbereichs oder ist zumindest an einer Stelle angebracht, an der die Siegelung peelfähig ist.

In einer erfindungsgemäßen Ausführungsform der Kunststoffverpackung weist die Deckelfolie mindestens eine Ausbuchtung und die Verpackungsmulde mindestens eine dazu komplementäre Einbuchtung auf, die einander gegenüber liegen und an denen jeweils ein Teil des Klettverschlusses angebracht ist.

In einer weiteren erfindungsgemäßen Ausführungsform der Kunststoffverpackung weist die Deckelfolie mindestens eine Einbuchtung und die Verpackungsmulde mindestens eine dazu komplementäre Ausbuchtung auf, die einander gegenüber liegen und an denen jeweils ein Teil des Klettverschlusses angebracht ist.

In einer weiteren erfindungsgemäßen Ausführungsform weist entweder die Deckelfolie oder die Verpackungsmulde eine Einbuchtung auf, in der jeweils ein komplementärer Teil des/der Klettverschlusses/Klettverschlüsse angebracht ist.

Sofern ein fester Siegelbereich vorhanden ist, werden der/die Klettverschluß/Klettverschlüsse so an der Kunststoffverpackung angebracht, daß sie außerhalb des Bereichs der festen Siegelung, vorzugsweise diametral gegenüber liegen. Diese Anordnung hat den Vorteil, daß die Deckelfolie gespannt und dann mit dem/den Klettverschluß/Klettverschlüssen fest jedoch wieder lösbar verbunden werden kann.

Vorzugsweise weist die erfindungsgemäße Kunststoffverpackung zusätzliche Mittel, wie z. B. Öffnungshilfen und/oder Mittel zum Wiederverschließen der Verpackung auf. Solche Mittel sind vorzugsweise ein Reißverschluß, wie z.B. in der EP 0 621 197 A1 offenbart, eine Dichtlippe, ein Schnappverschluß, wie in der EP 0 427 512 offenbart oder eine Noppe, wie in der Parallelanmeldung mit dem internen Aktenzeichen CH 8007 offenbart. Diese Veröffentlichungen bzw. die Parallelanmeldung werden hiermit als Referenz eingeführt und sind somit Teil der Offenbarung.

Vorzugsweise werden in der erfindungsgemäßen Verpackung Lebensmittel, vorzugsweise feste, wie z. B. frische oder gekochte Fleischwaren, verpackt.

Mit der erfindungsgemäßen Kunststoffverpackung ist es möglich, eine einmal geöffnete Verpackung haltbar, jedoch wieder lösbar zu verschließen. Das Verschließen bzw. Öffnen ist für den Benutzer leicht durchführbar. Die Kunststoffverpackung ist einfach und kostengünstig herzustellen.

Im Folgenden wird die Erfindung anhand der Figuren 1-4 erläutert. Die Erläuterungen sind lediglich beispielhaft und schränken den allgemeinen Erfindungsgedanken nicht ein.

**Figur 1** zeigt eine erfindungsgemäße Kunststoffverpackung, bei der die Verschluß-Teile der Klettverschlüsse in Einbuchtungen bzw. an Ausbuchtungen angebracht ist.

**Figur 2** zeigt eine erfindungsgemäße Kunststoffverpackung, bei der ein VerschlußTeil der Klettverschlüsse in Einbuchtungen angebracht ist.

**Figur 3** zeigt eine erfindungsgemäße Kunststoffverpackung, bei der der Klettverschluß außerhalb des Siegelbereichs angebracht ist und die eine Öffnungshilfe aufweist.

**Figur 4** zeigt einer erfindungsgemäße Kunststoffverpackung, bei der der Klettverschluß außerhalb des Siegelbereichs angebracht ist.

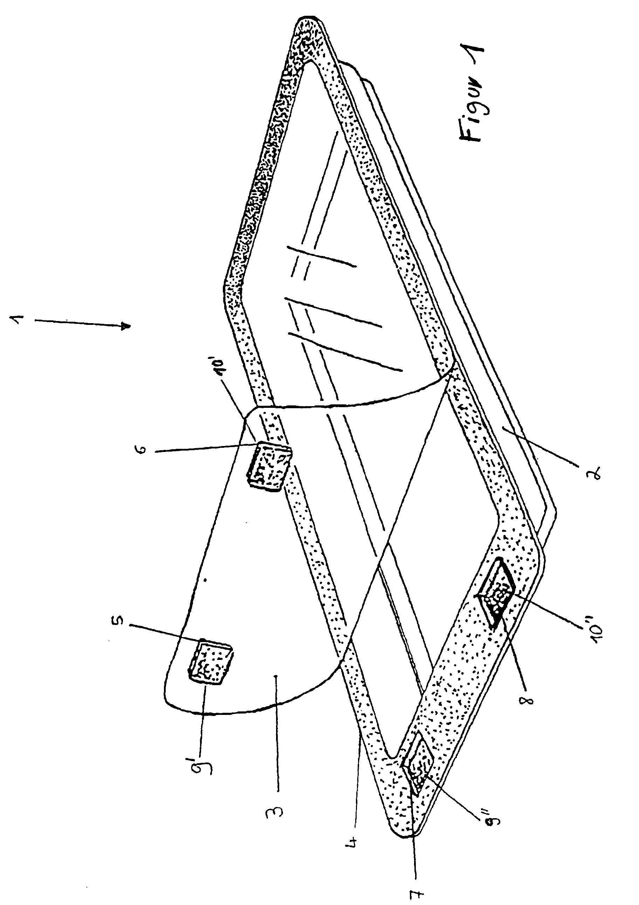

**Figur 1** zeigt eine erfindungsgemäße Kunststoffverpackung 1, die aus einer Verpackungsmulde 2 und einer Deckelfolie 3 besteht. Die Verpackung weist einen Siegelbereich 4 auf, der waagerecht angeordnet ist und sich um die gesamte Verpackungsmulde 2 herum erstreckt. In diesem Siegelbereich 4 ist die Deckelfolie 3 an die Verpackungsmulde 2 gesiegelt, wobei die Deckelfolie in dem schwach gepunkteten Abschnitt des Siegelbereiches 4 peelbar an die Verpackungsmulde gesiegelt ist, während sie in dem stark gepunkteten Abschnitt des Siegelbereiches 4 fest an die Verpackungsmulde gesiegelt ist. Bei Öffnen wird die Deckelfolie nur an drei Seiten von der Verpackungsmulde abgezogen und bleibt im Abschnitt der festen Siegelung mit dieser verbunden. Die Deckelfolie, eine gasdichte Polyethylenterephtalat (PET)/EVOH/PE/PB-Folie, weist zwei Ausbuchtungen 5, 6 und die Verpackungsmulde zwei komplementäre Einbuchtungen 7, 8 auf, die den Ausbuchtungen genau gegenüberliegend angeordnet sind, so daß die Ausbuchtungen in die Einbuchtungen gesteckt werden können. An den Aus- bzw. in den Einbuchtungen sind jeweils die komplementären Teile 9', 9", 10', 10" von jeweils zwei Klettverschlüssen angebracht, die eine Kantenlänge von 1x1 cm aufweisen. Die Klettverschlüsse befinden sich im Siegelbereich der Kunststoffverpackung. Der Fachmann erkennt, daß die Klettverschlüsse auch an anderen Stellen im Siegelbereich angeordnet bzw. daß neben den dargestellten zwei noch weitere Klettverschlüsse im Siegelbereich vorhanden sein können.

Nach dem Öffnen der Deckelfolie wird die Verpackung wieder verschlossen, indem die komplementären Teile der Klettverschlüsse zusammengedrückt werden.

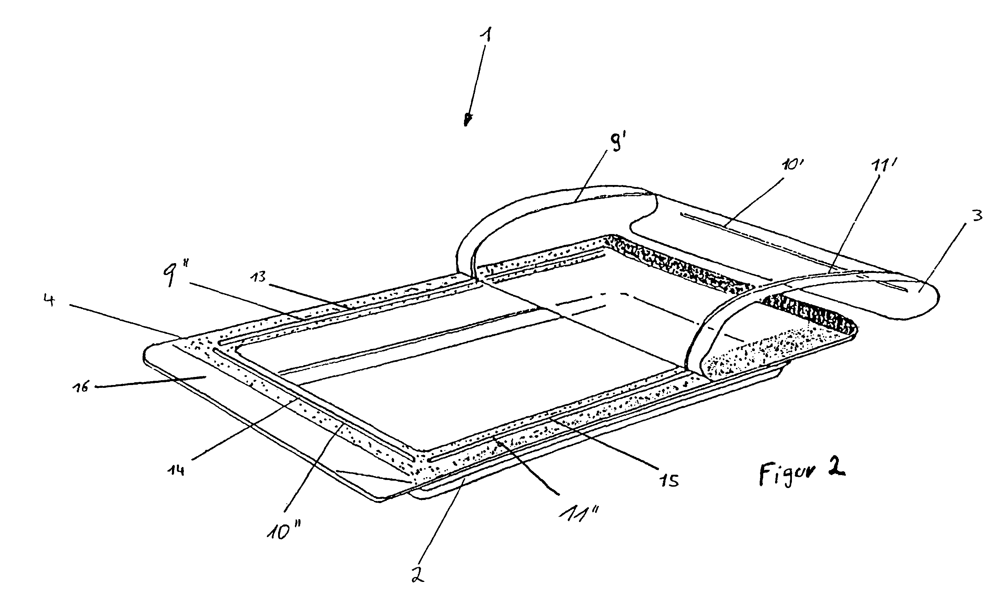

**Figur 2** zeigt ebenfalls eine erfindungsgemäße Kunststoffverpackung 1, die aus einer Verpackungsmulde 2 und einer Deckelfolie 3 besteht. Die Verpackung weist einen Siegelbereich 4 auf, der waagerecht angeordnet ist und sich um die gesamte Verpackungsmulde 2 herum erstreckt. In diesem Siegelbereich 4 ist die Deckelfolie 3 an die Verpackungsmulde 2 gesiegelt, wobei die Deckelfolie in dem schwach gepunkteten Abschnitt des Siegelbereiches 4 peelbar an die Verpackungsmulde gesiegelt ist, während sie in dem stark gepunkteten Abschnitt des Siegelbereiches 4 fest an die Verpackungsmulde gesiegelt ist. Bei öffnen wird die Deckelfolie nur an drei Seiten von der Verpackungsmulde abgezogen und bleibt im Abschnitt der festen Siegelung mit dieser verbunden. An der Deckelfolie, eine flexible PET- Folie, sind schmale Streifen des einen Verschlußelementes 9', 10', 11' des Klettverschlusses 9, 10, 11 angeklebt. Die Verpackungsmulde hingegen weist Einbuchtungen 13,14, 15 auf, die den Streifen 9', 10', 11' des Klettverschlusses 9, 10, 11 unmittelbar gegenüberliegen. In den Einbuchtungen 13, 14, 15 befinden sich die komplementären Teile 9', 10', 11' der Klettverschlüsse (nicht dargestellt). Beim Schließen der Deckelfolie werden die Verschlußelemente 9', 10', 11' der Klettverschlüsse in die Einbuchtungen 13, 14, 15 gedrückt und verbinden sich dort mit den komplementären Teilen 9", 10", 11".

Im vorderen Bereich 16 weist die Kunststoffverpackung einen Bereich auf, in dem die Deckelfolie nicht an die Verpackungsmulde gesiegelt ist, damit der Verbraucher die Deckelfolie leichter abziehen kann.

Der Fachmann erkennt, daß anstelle der Klettverschlüsse 9, 11 auch andere Mittel zur Wiederverschließung, wie z.B. Zipper, Dichtlippen und/oder Schnappverschlüsse vorgesehen sein können.

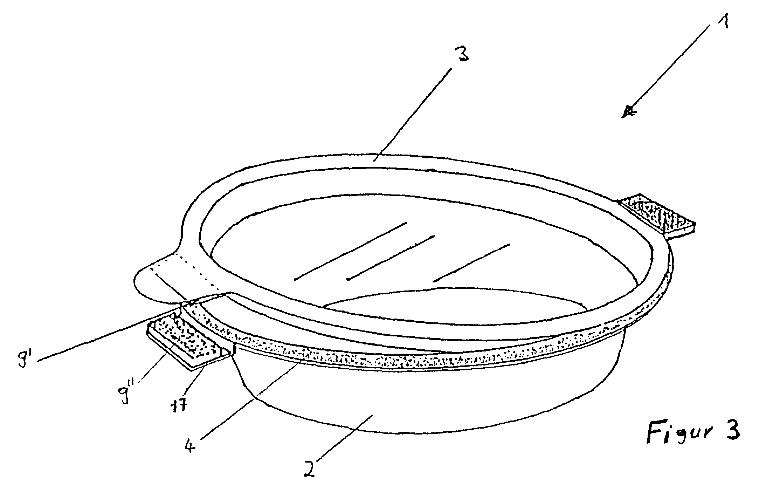

**Figur 3** zeigt eine wiederverschließbare Kunststoffverpackung 1, die aus einer Verpackungsmulde 2 und einer Deckelfolie 3 besteht. Die Verpackung weist einen Siegelbereich 4 auf, der waagerecht angeordnet ist und sich um die gesamte Verpackungsmulde 2 herum erstreckt. In diesem Siegelbereich ist die Deckelfolie 3 an die Verpackungsmulde 2 gesiegelt, wobei die Deckelfolie in dem schwach gepunkteten Bereich peelbar an die Verpackungsmulde gesiegelt ist, während sie in dem stark gepunkteten Bereich fest an die Verpackungsmulde gesiegelt ist. Beim Öffnen wird die Deckelfolie von der Verpackungsmulde abgezogen und bleibt nur in dem stark gepunkteten Bereich mit dieser verbunden. An der Deckelfolie, eine steife PET-PE-Folie, ist unterhalb der Öffnungshilfe ein Teil 9'des Klettverschlusses 9 angeklebt. Der dazu komplementäre Teil 9" des Klettverschlusses 9 ist an einem kleinen Absatz 17 der Verpackungsmulde angeklebt.

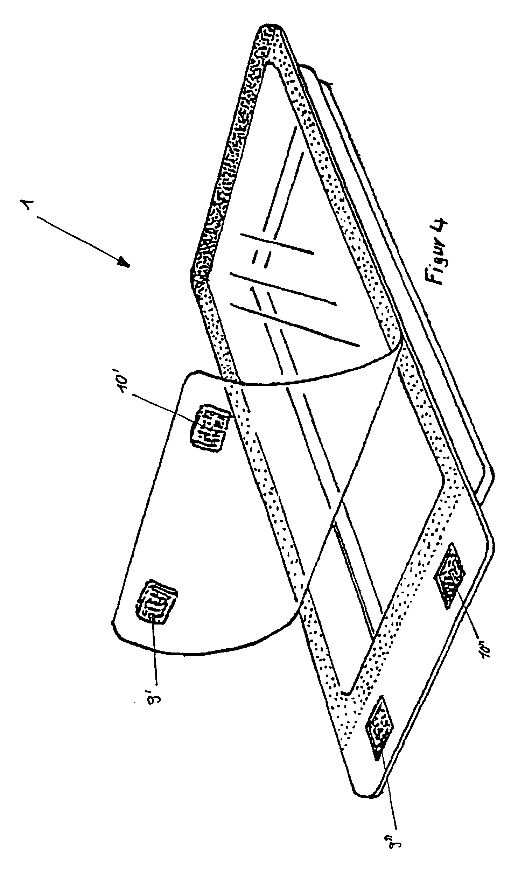

**Figur 4** zeigt die erfindungsgemäße Kunststoffverpackung gemäß **Figur 1** nur, daß in diesem Fall die komplementären Verschluß-Teile 9', 9", 10', 10" von jeweils zwei Klettverschlüssen 9, 10 außerhalb des Siegelbereichs angeordnet sind und sich in Einbuchtungen bzw. Ausbuchtungen der Verpackungsmulde bzw. Deckelfolie befinden.

## Patentansprüche

1. Wiederverschließbare Kunststoffverpackung (1) aus einer Verpackungsmulde (2) und einer Deckelfolie (3), wobei die Deckelfolie (3) im Siegelbereich (4) mindestens teilweise peelbar an die Verpackungsmulde gesiegelt ist, **dadurch gekennzeichnet, daß** die Kunststoffverpackung mindestens einen Klettverschluß (9, 10, 11) aufweist, dessen komplementäre Teile (9', 10', 11', 9", 10", 11") jeweils an der Verpackungsmulde bzw. an der Deckelfolie einander gegenüberliegend angebracht sind und mit dem die Kunststoffverpackung nach dem Öffnen wiederverschließbar ist und daß die Deckelfolie mindestens eine Ausbuchtung (5, 6) und die Verpackungsmulde mindestens eine dazu komplementäre Einbuchtung (7, 8) aufweist, die einander gegenüber liegen und an denen jeweils ein Verschlußelement (9', 10', 11', 9", 10", 11") des Klettverschlusses (9, 10, 11) angebracht ist.

2. Wiederverschließbare Kunststoffverpackung (1) aus einer Verpackungsmulde (2) und einer Deckelfolie (3), wobei die Deckelfolie (3) im Siegelbereich (4) mindestens teilweise peelbar an die Verpackungsmulde gesiegelt ist, **dadurch gekennzeichnet, daß** die Kunststoffverpackung mindestens einen Klettverschluß (9, 10, 11) aufweist, dessen komplementäre Teile (9', 10', 11', 9",10", 11") jeweils an der Verpackungsmulde bzw. an der Deckelfolie einander gegenüberliegend angebracht sind und mit dem die Kunststoffverpackung nach dem Öffnen wiederverschließbar ist und daß die Deckelfolie mindestens eine Einbuchtung und die Verpackungsmulde mindestens eine dazu komplementäre Ausbuchtung aufweist, die einander gegenüber liegen und an denen jeweils ein Verschlußelement (9', 10', 11', 9", 10", 11") des Klettverschlusses (9, 10, 11) angebracht ist.

3. Wiederverschließbare Kunststoffverpackung (1) aus einer Verpackungsmulde (2) und einer Deckelfolie (3), wobei die Deckelfolie (3) im Siegelbereich (4) mindestens teilweise peelbar an die Verpackungsmulde gesiegelt ist, **dadurch gekennzeichnet, daß** die Kunststoffverpackung mindestens einen Klettverschluß (9, 10, 11) aufweist, dessen komplementäre Teile (9', 10', 11', 9", 10", 11") jeweils an der Verpackungsmulde bzw. an der Deckelfolie einander gegenüberliegend angebracht sind und mit dem die Kunststoffverpackung nach dem öffnen wiederverschließbar ist daß die Deckelfolie oder die Verpackungsmulde mindestens eine Einbuchtung (13, 14, 15) aufweist und daß ein Verschlußelement (9', 10', 11', 9",10", 11") des Klettverschlusses (9, 10, 11) in der Einbuchtung und der jeweils komplementäre Teil des Klettverschlusses auf der Höhe der Siegelebene angebracht ist.

4. Wiederverschließbare Kunststoffverpackung gemäß Anspruch 1 oder 2, **dadurch gekennzeichnet, daß** der/die Klettverschlüsse außerhalb des Siegelbereichs (4) angebracht sind.

5. Wiederverschließbare Kunststoffverpackung gemäß Anspruch 1 oder 2, **dadurch gekennzeichnet, daß** der/die Klettverschlüsse im Bereich der peelbaren Siegelung angebracht sind.

6. Wiederverschließbare Kunststoffverpackung gemäß einem der Ansprüche 1 bis 5, **dadurch gekennzeichnet, daß** 5 bis 25 % des Siegelbereiches eine feste Siegelung aufweisen.

7. Wiederverschließbare Kunststoffverpackung gemäß Anspruch 6, **dadurch gekennzeichnet, daß** der/die Klettverschlüsse (9, 10, 11) und der Bereich der festen Siegelung einander diametral gegenüberliegt(en).

8. Wiederverschließbare Kunststoffverpackung gemäß einem der Ansprüche 1 bis 7, **dadurch gekennzeichnet, daß** die komplementären Verschlußelemente des Klettverschlusses an der Deckelfolie und an der Verpackungsmulde jeweils festgeklebt sind.

9. Wiederverschließbare Kunststoffverpackung gemäß einem der Ansprüche 1 bis 8, **dadurch gekennzeichnet, daß** sie mindestens ein zusätzliches Mittel zur Wiederverschließung der Verpackung aufweist.

10. Wiederverschließbare Kunststoffverpackung gemäß Anspruch 9, **dadurch gekennzeichnet, daß** dieses Mittel ein Reißverschluß, eine Dichtlippe und/oder ein Schnappverschluß ist.

11. Verpackung gemäß einem der Ansprüche 1 bis 10, **dadurch gekennzeichnet, daß** die Verpackungsmulde aus einer gegebenenfalls mehrschichtigen Folie mit einer geschäumten Trägerfolie als Basisfolie und ggf. einer Gassperrschicht hergestellt ist.

12. Wiederverschließbare Kunststoffverpackung gemäß einem der Ansprüche 1 bis 11, **dadurch gekennzeichnet, daß** die Deckelfolie aus einer thermoformbaren Folie aus Polyethylenterephthalat oder Polypropylen mit einer Ethylenvinylalkoholcopolymer-Gassperrschicht und Polyethylen aufgebaut ist und die Verpackungsmulde aus einer geschäumten Polypropylen-Folie als Trägerfolie aufgebaut ist.

## Claims

1. A resealable plastics package (1) comprising a package tray (2) and a lid film (3), wherein the lid film (3) is at least in part peelably heat-sealed in a heat-seal zone (4) to the package tray, **characterised in that** the plastics package comprises at least one hook and loop closure (9, 10, 11), the complementary portions (9', 10', 11', 9", 10", 11") of which are in each case affixed opposite one another on the package tray or on the lid film and with which the plastics package is resealable after opening, and **in that** the lid film comprises at least one convex portion (5, 6) and the package tray comprises at least one concave portion (7, 8) complementary thereto, which portions are opposite one another and onto which in each case is affixed a closure element (9', 10', 11', 9", 10", 11") of the hook and loop closure (9, 10, 11).

2. A resealable plastics package (1) comprising a package tray (2) and a lid film (3), wherein the lid film (3) is at least in part peelably heat-sealed in a heat-seal zone (4) to the package tray, **characterised in that** the plastics package comprises at least one hook and loop closure (9, 10, 11), the complementary portions (9', 10', 11', 9", 10", 11") of which are in each case affixed opposite one another on the package tray or on the lid film and with which the plastics package is resealable after opening, and **in that** the lid film comprises at least one concave portion and the package tray comprises at least one convex portion complementary thereto, which portions are opposite one another and onto which in each case is affixed a closure element (9', 10', 11', 9", 10", 11") of the hook and loop closure (9, 10, 11).

3. A resealable plastics package (1) comprising a package tray (2) and a lid film (3), wherein the lid film (3) is at least in part peelably heat-sealed in the heat-seal zone (4) to the package tray, **characterised in that** the plastics package comprises at least one hook and loop closure (9, 10, 11), the complementary portions (9', 10', 11', 9", 10", 11") of which are in each case affixed opposite one another on the package tray or on the lid film and with which the plastics package is resealable after opening, **in that** the lid film or the package tray comprises at least one concave portion (13, 14, 15) and **in that** a closure element (9', 10', 11', 9", 10", 11") of the hook and loop closure (9, 10, 11) is affixed in the concave portion and the complementary portion of the hook and loop closure is in each case affixed at the level of the heat-seal plane.

4. A resealable plastics package according to claim 1 or 2, **characterised in that** the hook and loop closure(s) is/are affixed outside the heat-seal zone (4).

5. A resealable plastics package according to claim 1 or 2, **characterised in that** the hook and loop closure(s) is/are affixed in the peelable heat-seal zone.

6. A resealable plastics package according to one of claims 1 to 5, **characterised in that** 5 to 25% of the heat-seal zone exhibits a strong heat-seal.

7. A resealable plastics package according to claim 6, **characterised in that** the hook and loop closure(s) (9, 10, 11) and the strong heat-seal zone are diametrically opposite one another.

8. A resealable plastics package according to one of claims 1 to 7, **characterised in that** the complementary closure elements of the hook and loop closure are respectively firmly adhesively bonded to the lid film and the package tray.

9. A resealable plastics package according to one of claims 1 to 8, **characterised in that** it comprises at least one additional means for resealing the package.

10. A resealable plastics package according to claim 9, **characterised in that** said means is a zip closure, a sealing lip and/or a snap closure.

11. A package according to one of claims 1 to 10, **characterised in that** the package tray is produced from an optionally multilayered film with a foamed support film as the base film and optionally a gas barrier layer.

12. A resealable plastics package according to one of claims 1 to 11, **characterised in that** the lid film is produced from a thermoformable film of polyethylene terephthalate or polypropylene with an ethylene/vinyl alcohol copolymer gas barrier layer and polyethylene and the package tray is produced from a foamed polypropylene film as the support film.

## Revendications

1. Emballage plastique (1) refermable composé d'un bac d'emballage (2) et d'une feuille de couvercle (3) ; la feuille de couvercle (3) étant, au moins partiellement, scellée de façon pelable sur le bac d'emballage (2), **caractérisé en ce que** l'emballage plastique comporte au moins une fermeture auto-agrippante (9, 10, 11) dont les pièces complémentaires (9', 10', 11', 9", 10", 11") sont fixées de façon à se faire face mutuellement à chaque fois sur le bac d'emballage ou sur la feuille de couvercle et avec laquelle fermeture on peut refermer l'emballage plastique après l'ouverture et **caractérisé en ce que** la feuille de couvercle comporte au moins un renflement (5, 6) et le bac d'emballage un renfoncement, qui se trouvent mutuellement face à face et sur lesquels renflement et renfoncement est fixé à chaque fois un élément de fermeture (9', 10', 11', 9", 10", 11") de la fermeture auto-agrippante (9, 10, 11).

2. Emballage plastique (1) refermable composé d'un bac d'emballage (2) et d'une feuille de couvercle (3); la feuille de couvercle (3) étant, au moins partiellement, scellée de façon pelable sur le bac d'emballage (2), **caractérisé en ce que** l'emballage plastique comporte au moins une fermeture auto-agrippante (9, 10, 11) dont les pièces complémentaires (9', 10', 11', 9", 10", 11") sont fixées de façon à se faire face mutuellement à chaque fois sur le bac d'emballage ou sur la feuille de couvercle et avec laquelle fermeture on peut refermer l'emballage plastique après l'ouverture et **caractérisé en ce que** la feuille de couvercle comporte au moins un renfoncement et le bac d'emballage un renflement, qui se trouvent mutuellement face à face et sur lesquels renflement et renfoncement est fixé à chaque fois un élément de fermeture (9', 10', 11', 9", 10", 11") de la fermeture auto-agrippante (9, 10, 11).

3. Emballage plastique (1) refermable composé d'un bac d'emballage (2) et d'une feuille de couvercle (3) ; la feuille de couvercle (3) étant, au moins partiellement, scellée de façon pelable sur le bac d'emballage (2), **caractérisé en ce que** l'emballage plastique comporte au moins une fermeture auto-agrippante (9, 10, 11) dont les pièces complémentaires (9', 10', 11', 9", 10", 11") sont fixées de façon à se faire face mutuellement à chaque fois sur le bac d'emballage ou sur la feuille de couvercle et avec laquelle fermeture on peut refermer l'emballage plastique après l'ouverture et **caractérisé en ce que** la feuille de couvercle ou le bac d'emballage comporte au moins un renfoncement (13, 14, 15) et **en ce que** l'élément de fermeture (9', 10', 11', 9", 10", 11") est fixé dans le renfoncement et que la partie complémentaire respective de la fermeture auto-agrippante est fixée au niveau du plan de scellement.

4. Emballage plastique refermable selon la revendication 1 ou 2, **caractérisé en ce que** la / les fermeture (s) auto-agrippante (s) est ou sont fixée (s) à l'extérieure de la zone de scellement (4).

5. Emballage plastique refermable selon la revendication 1 ou 2, **caractérisé en ce que** la / les fermeture (s) auto-agrippante (s) est ou sont fixée (s) dans la zone de scellement pelable.

6. Emballage plastique refermable selon la revendication 1 à 5, **caractérisé en ce que** 5 à 25 % de la zone de scellement présentent un scellement fixe.

7. Emballage plastique refermable selon la revendication 6, **caractérisé en ce que** la / les fermeture (s) auto-agrippante (s) (9, 10, 11) et la zone de scellement fixe sont situées de façon diamétralement opposée l'une par rapport à l'autre.

8. Emballage plastique refermable selon la revendication 1 à 7, **caractérisé en ce que** les éléments complémentaires de fermeture de la fermeture auto-agrippante sont, à chaque fois, collés sur la feuille de couvercle et sur le bac d'emballage.

9. Emballage plastique refermable selon la revendication 1 à 8, **caractérisé en ce que** l'emballage comporte au moins un moyen supplémentaire pour refermer l'emballage .

10. Emballage plastique refermable selon la revendication 9, **caractérisé en ce que** ce moyen est une fermeture éclair, une lèvre de fermeture et / ou une fermeture à encliquetage.

11. Emballage plastique refermable selon la revendication 1 à 10, **caractérisé en ce que** le bac d'emballage est fabriqué , si nécessaire, en une feuille à multicouche avec une feuille de support en de la mousse comme feuille de base et éventuellement avec une couche d'arrêt des gaz.

12. Emballage plastique refermable selon une des revendications précédentes, **caractérisé en ce que** la feuille de couvercle est constituée d'une feuille thermodéformable en polyéthylène téréphtalate ou en polypropylène avec une couche d'arrêt des gaz en un copolymère d'alcool d'éthylène de vinyle et polyéthylène et **caractérisé en ce que** le bac d'emballage est constitué d'une feuille en polypropylène en mousse en tant que feuille de support.
